# EUROPÄISCHE PATENTSCHRIFT

(11) **EP 0 756 249 B1**
(45) Veröffentlichungstag und Bekanntmachung des Hinweises auf die Patenterteilung: **19.06.2002**
(21) Anmeldenummer: 96111943.5
(22) Anmeldetag: 24.07.1996
(51) Int. Cl.: G07C 9/00, G07F 7/00

(54) **System und Verfahren zur zeitlich begrenzten Energiefreischaltung wenigstens eines elektrischen oder elektronischen Gerätes**
System and method for time limited energy release of at least one electrical or electronic device
Système et procédé la libération d'énergie temporisée d'au moins un appareil électrique ou électronique

(30) Priorität: 28.07.1995 DE 19527597
(43) Veröffentlichungstag der Anmeldung: 29.01.1997
(73) Patentinhaber: Good Night Inn Motel Management GmbH, 82494 Krün (DE)
(72) Erfinder: Neumann, Evau, 82494 Krün (DE)
(74) Vertreter: Flosdorff, Jürgen, Dr.

(56) Entgegenhaltungen:
- EP-A- 0 122 244
- WO-A-81/03390
- DE-A- 4 140 051
- GB-A- 2 243 705
- US-A- 3 653 480
- US-A- 4 624 578
- US-A- 5 060 079

## Beschreibung

Die Erfindung betrifft ein System zur zeitlich begrenzten Energiefreischaltung wenigstens eines elektrischen oder elektronischen Gerätes und ein entsprechendes Verfahren, bei dem sich das Gerät in einem durch eine Schließeinrichtung gesicherten Raum befindet.

Geräte, die gegen Entgelt eine bestimmte Zeit lang in Anspruch genommen werden, können beispielsweise dadurch für den Benutzer freigegeben werden, daß eine Bedienungsperson das Gerät einschaltet und nach Ablauf einer vorbestimmten Zeitdauer wieder abstellt, was beispielsweise durch eine Fernschaltung geschehen kann, die der Benutzer des Gerätes nicht selbst bedienen kann. Ein solches herkömmliches System erfordert zumindest zeitweilig die Anwesenheit und Aufmerksamkeit einer Bedienungsperson, was in aller Regel mit beträchtlichen Kosten verbunden ist.

Es ist auch seit langem bekannt, ein elektrisches oder elektronisches Gerät dadurch in Betrieb zu nehmen, daß Münzen in das Gerät eingeworfen werden, wodurch das Gerät eine entsprechende Zeitdauer lang freigeschaltet wird. Dieses bekannte System hat den Nachteil, daß der Benutzer des Gerätes die notwendigen Münzen zur Hand haben muß, daß das sich in dem Gerät ansammelnde Geld von einer Bedienungsperson von Zeit zu Zeit entnommen werden muß, wobei in diesem Zusammenhang auch Sicherheitsprobleme auftreten, und daß der Benutzer in aller Regel zuviel eingeworfene Münzen -jedenfalls nicht vollständig- zurück erhalten kann, wenn er das Gerät nicht über die volle, durch Münzeinwurf vorgegebene Zeit in Anspruch nehmen will.

Die US-A-5060079 offenbart ein System zur Freischaltung eines Fernsehgerätes mit einer Magnetkartencodiervorrichtung, mit der Zeiteinheiten auf eine Spur einer Magnetkarte aufcodierbar sind, und mit einer in dem Stromkreis des Fernsehgerätes angeordneten Energiebox, die nach Eingabe der Magnetkarte das Fernsehgerät freischaltet und Zeiteinheiten von der Magnetkarte abcodiert.

Die WO 8103390 A offenbart ein ähnliches System, bei dem die Magnetkarte zwei Spuren hat, auf die Daten aufcodierbar sind, die zur Benutzung einer Einrichtung wie beispielsweise eines Transportmittels, einer Bücherei etc. berechtigen oder ein Gerät wie ein Fernsehgerät freischalten. Dabei ist auf eine Spur eine Zeitspanne wie beispielsweise ein Monat aufcodiert, während die zweite Spur die Nutzung einschränkende spezielle Zeitangaben wie z.B. Uhrzeit oder Anzahl der Stunden enthält.

Der vorliegenden Erfindung liegt die Aufgabe zugrunde, ein System zur zeitlich begrenzten Energiefreischaltung eines oder mehrerer elektrischen und/oder elektronischer Geräte anzugeben, bei dem die vorstehend aufgeführten Nachteile ganz oder weitgehend vermieden sind. Außerdem soll ein verbessertes Verfahren zum zeitlich begrenzten Energiefreischalten eines oder mehrerer Geräte angegeben werden.

Diese Aufgaben werden erfindungsgemäß durch die in den Ansprüchen 1 und 3 angegebenen Merkmale gelöst. Vorteilhafte Weiterbildungen der Erfindung sind in den abhängigen Ansprüchen gekennzeichnet.

Bei dem erfindungsgemäßen System codiert eine Magnetkartencodiervorrichtung die vom Benutzer gewünschten Zeiteinheiten, in der Regel Stunden und Minuten, auf eine Spur einer Magnetkarte, die der Benutzer in eine Energiebox eingibt, die in dem Stromkreis des/der Geräte angeordnet ist. Solange sich auf der Magnetkarte Zeiteinheiten befinden, wird das Gerät bei in der Energiebox befindlicher Magnetkarte freigeschaltet, so daß das Gerät in Betrieb genommen werden kann. Vom Beginn der Einschaltung des Gerätes an werden auf vorbestimmte Weise Zeiteinheiten von der Magnetkarte abcodiert.

Dieses System ist für eine Vielfalt elektrischer oder elektronischer Geräte geeignet, beispielsweise für Spielgeräte, Sonnenbänke, Trimmgeräte mit elektronischer Anzeige etc. Mit besonderem Vorteil ist das System dazu vorgesehen, ein Telefon und/oder ein Fernsehgerät oder einen daran angeschlossenen Videorecorder über eine bestimmte Zeitdauer in Betrieb zu nehmen.

Wieter sieht die Erfindung vor, die Magnetkarte außerdem dazu zu verwenden, eine Schließeinrichtung zu entsperren, in der sich das oder die Geräte befinden. Hierzu ist vorgesehen, daß auf eine weitere Spur der Magnetkarte Zeitangaben aufcodierbar sind, die bevorzugt einen durch Datum und/oder Uhrzeit begrenzten Zeitraum angeben. Die Schließeinrichtung sollte in diesem Fall mit einer Einrichtung versehen sein, die das jeweilige Datum und die Uhrzeit angibt, sowie mit einer Leseeinheit für die Magnetkarte, die überprüft, ob das jeweilige Datum und die jeweilige Uhrzeit in den Zeitbereich fällt, der auf die Magnetkarte aufcodiert ist. So kann beispielsweise die Magnetkarte auf der weiteren Spur die Zeitangabe 1. 1. 1995, 13 Uhr bis 3. 1. 1995, 10 Uhr enthalten, was zur Folge hat, daß die Schließeinrichtung innerhalb dieses Zeitraums nach Eingabe der Magnetkarte automatisch entsperrt wird, während die Schließeinrichtung vor oder nach diesem Zeitraum auf die Magnetkarte nicht anspricht.

Mit Hilfe der Zeitangabe auf der weiteren Spur der Magnetkarte läßt sich demnach beispielsweise die durch ein Schloß gesicherte Tür zu einem Raum öffnen, in dem sich das oder die elektrische oder elektronischen Geräte befinden, die mit Hilfe derselben Magnetkarte durch die aufcodierten Zeiteinheiten auf der ersten Spur der Magnetkarte zeitlich begrenzt in Anspruch genommen werden können.

Das erfindungsgemäße System läßt sich mit besonderem Vorteil in einem Hotel verwenden, in dem der Hotelgast nur in der Zeit, in der er sein Hotelzimmer gebucht hat, dessen Tür von außen öffnen kann.

Das erfindungsgemäße Verfahren sieht vor, daß die Zeitangaben - beispielsweise die Aufenthaltsdauer des Hotelgastes in dem Hotel- durch eine Bedienungsperson, die eine erste Magnetkartencodierstation betätigt, auf eine Spur der Magnetkarte aufcodiert werden. Der Benutzer der Magnetkarte, beispielsweise der Hotelgast, kann dann mit Hilfe einer zweiten Magnetkartencodierstation selbst Zeiteinheiten auf eine zweite Spur der Magnetkarte aufcodieren lassen.

Wenn er den Raum -in diesem Fall sein Hotelzimmer- mit Hilfe der Magnetkarte geöffnet hat, führt er die Magnetkarte in eine dort befindliche Energiebox ein, wodurch er eine unbegrenzte Energiefreischaltung erhält, die wieder abfällt, wenn er die Magnetkarte aus der Energiebox entnimmt. Der Gast kann nun beispielsweise ein Telefon oder einen Fernsehapparat in Betrieb nehmen, wobei auf vorbestimmte Weise während der Laufzeit des Gerätes Zeiteinheiten von der Magnetkarte abcodiert werden.

Nach einem weiteren Vorschlag der Erfindung können die auf der Magnetkarte verbliebenen Zeiteinheiten mit der zugehörigen Magnetkartencodiervorrichtung wieder abcodiert werden, was in einer bevorzugten Ausführungsform der Erfindung durch den Benutzer der Magnetkarte selbst veranlaßt werden kann.

Gemäß der vorliegenden Erfindung ist keine Bedienungsperson erforderlich, um bei einer gewünschten Benutzung einer oder mehrerer elektrischer oder elektronischer Geräte dieses zeitlich begrenzt freizuschalten. Dies geschieht mittels einer Magnetkarte, die der Benutzer selbst an einer Magnetkartencodierstation in dem gewünschten Umfang codiert hat. Diese Magnetkartencodierstation kann an einer leicht zu überwachenden, zentralen Stelle stehen und eine Vielzahl von Magnetkarten zur zeitlich begrenzten Freischaltung zahlreicher Geräte codieren, so daß nur noch in die zentrale Magnetkartencodierstation und nicht mehr in die Geräte selbst Münzen oder Geldscheine eingegeben werden, die von Zeit zu Zeit entnommen werden müssen. Für nicht verbrauchte Zeiteinheiten gibt die Magnetkartencodierstation den entsprechenden geldlichen Gegenwert heraus, so daß ein Benutzer nur mit den tatsächlich in Anspruch genommenen Zeiteinheiten belastet wird.

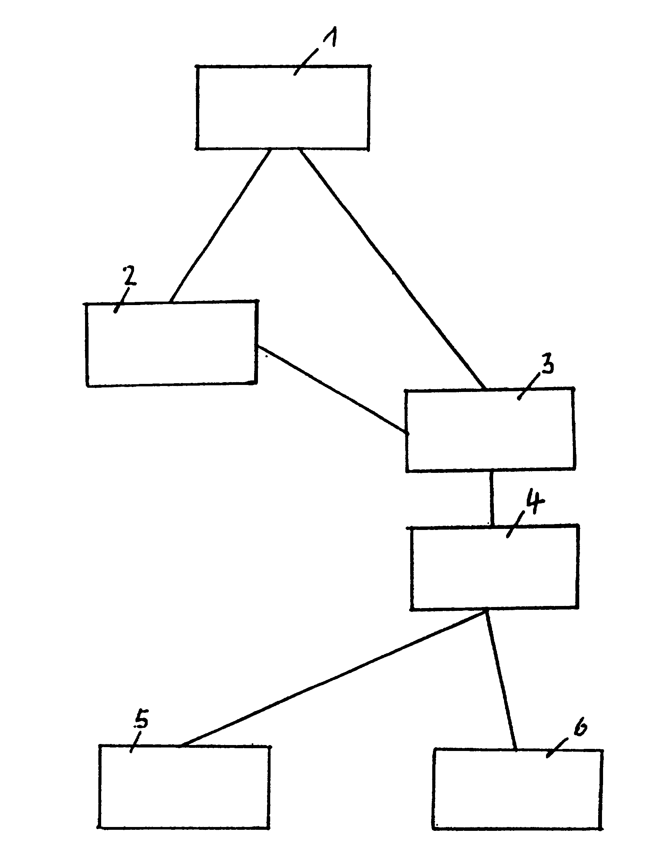

Eine bevorzugte Ausführungsform der Erfindung wird anhand der beigefügten Zeichnung erläutert, die rein schematisch das erfindungsgemäße Verfahren wiedergibt.

Das erfindungsgemäße System und Verfahren wird nachfolgend für die Anwendung in einem Hotelbetrieb beschrieben.

In dem Receptionsbereich des Hotels steht eine erste Magnetkartencodierstation 1, an der eine Bedienungsperson für einen ankommenden Gast eine Magnetkarte mit Zeitangaben codiert, die dem Zeitraum entsprechen, für den der Gast ein Hotelzimmer gebucht hat. Mit der so vorbereiteten Magnetkarte kann der Gast das Türschloß 3 seines Zimmers innerhalb des aufcodierten Zeitraums beliebig oft öffnen.

An einer zweiten Magnetkartencodierstation 2, die sich bevorzugt ebenfalls im Receptionsbereich des Hotels befindet und dort von der Bedienungsperson des Hotels überwacht werden kann, kann der Gast auf eine weitere Spur seiner Magnetkarte Zeiteinheiten aufcodieren, die ihm eine zeitlich begrenzte Energiefreischaltung des Telefons 5 und eines Fernsehgerätes mit Videorecorder 6 in seinem Hotelzimmer ermöglichen. Hierzu führt der Hotelgast nach Betreten seines Zimmers die Magnetkarte in eine dort befindliche Energiebox 4 ein, wodurch er während seines Zimmeraufenthaltes eine begrenzte Energiefreischaltung erhält, die wieder abfällt, wenn die Magnetkarte aus der Energiebox 4 entnommen wird.

Wenn der Hotelgast das Telefon 5 oder den Videorecorder 6 in Betrieb nimmt, werden auf vorbestimmte Weise Zeiteinheiten von der Magnetkarte in der Energiebox 4 abgebucht.

Wenn der an der Magnetkartencodierstation 1 aufcodierte Zeitraum abgelaufen ist, läßt sich das Schloß 3 mit der Magnetkarte nicht mehr öffnen. Eventuell auf der Magnetkarte verbliebene Zeiteinheiten kann der Gast durch die Magnetkartencodierstation 2 wieder abbuchen lassen.

Die Erfindung ist natürlich auch auf andere Fälle anwendbar, bei denen ein oder mehrere elektrische und/oder elektronische Geräte zeitlich begrenzt freigeschaltet werden sollen, wobei sie dann besondere Vorteile bietet, wenn dem Benutzer nur in einem vorbestimmten Zeitraum der Zugang zu dem durch eine Schließvorrichtung gesicherten Raum ermöglicht werden soll, in dem sich das Gerät oder die Geräte befindet/befinden.

## Patentansprüche

1. System zur zeitlich begrenzten Energiefreischaltung wenigstens eines elektrischen oder elektronischen Gerätes, das sich in einem durch eine Schließeinrichtung gesicherten Raum befindet,
**dadurch gekennzeichnet,**
**daß** an einer ersten Magnetkartencodiervorrichtung (1) auf eine erste Spur einer Magnetkarte Datums- und/oder Uhrzeitangaben aufcodierbar sind, wobei nach Eingabe der Magnetkarte in die Schließeinrichtung (3) diese bei Übereinstimmung der Datumsund/oder Uhrzeitangaben mit dem aktuellen Datum und der aktuellen Uhrzeit entsperrt wird,
**daß** an einer zweiten Magnetkartencodiervorrichtung (2) Zeiteinheiten auf eine zweite Spur der Magnetkarte aufcodierbar sind, und **daß** eine Energiebox (4) in dem Stromkreis des Gerätes (5,6) angeordnet ist, die nach Eingabe der mit Zeiteinheiten codierten Magnetkarte das Gerät (5,6) freischaltet und bei dessen Einschaltung Zeiteinheiten von der Magnetkarte abcodiert.

2. System nach Anspruch 1,
**dadurch gekennzeichnet, daß** Zeiteinheiten mit der zweiten Magnetkartencodiervorrichtung (2) abcodierbar sind.

3. Verfahren zur zeitlich begrenzten Energiefreischaltung wenigstens eines elektrischen oder elektronischen Gerätes, das sich in einem durch eine Schließeinrichtung gesicherten Raum befindet,
**gekennzeichnet durch** folgende Schritte:
a) an einer ersten Magnetkartencodierstation werden Zeitangaben auf eine erste Spur einer Magnetkarte aufcodiert;
b) ane iner zweiten Magnetkartencodierstation werden Zeiteinheiten auf eine zweite Spur der Magnetkarte aufcodiert;
c) die Magnetkarte wird in eine Schließeinrichtung eingegeben, die bei Übereinstimmung der Zeitangaben mit der aktuellen Zeit entsperrt wird;
d) die Magnetkarte wird aus der Schließeinrichtung entnommen;
e) die Magnetkarte wird in eine Energiebox eingegeben, die das Gerät freischaltet, wenn Zeiteinheiten auf der Magnetkarte aufcodiert sind;
f) während der Einschaltzeit des Gerätes werden Zeiteinheiten von der Energiebox abcodiert.

4. Verfahren nach Anspruch 3,
**dadurch gekennzeichnet, daß** die restlichen Zeiteinheiten von der zweiten Magnetkartencodierstation abcodiert werden.

## Claims

1. A system for time limited energy release of at least one electrical or electronic device which is positioned inside a room secured by a locking means,
**characterized in**
**that** on a first magnetic card encoding apparatus (1) date and/or time information can be encoded onto a first track of a magnetic card, and after insertion of the magnetic card into the locking means (3) said means is unlocked if the date and/or time information coincides with the actual date and the actual time,
**that** on a second magnetic card encoding apparatus (2) time units can be encoded onto a second track of the magnetic card,
and **that** an energy box (4) is arranged in the circuit of the device (5, 6), said energy box enabling the device (5, 6) after insertion of the time unit-encoded magnetic card and deducts time units from the magnetic card when the device is switched on.

2. The system according to claim 1,
**characterized in that** time units can be deducted with the second magnetic card encoding apparatus (2).

3. A method for time limited energy release of at least one electrical or electronic device which is positioned within a room secured by a locking means,
**characterized by** the following steps:
a) time information is encoded at a first magnetic card encoding station onto a first track of a magnetic card;
b) time units are encoded at a second magnetic card encoding station onto a second track of the magnetic card;
c) the magnetic card is inserted into a locking means which is unlocked if the time information coincides with the actual time;
d) the magnetic card is removed from the locking means;
e) the magnetic card is inserted into an energy box which enables the device when time units are encoded on the magnetic card;
f) during the switch-on period of the device time units are deducted by the energy box.

4. The method according to claim 3,
**characterized in that** the remaining time units are deducted by the second magnetic card encoding station.

## Revendications

1. Système pour la libération d'énergie limitée dans le temps d'au moins un appareil électrique ou électronique, qui se trouve dans une pièce protégée par une installation de fermeture, **caractérisé en ce que** peuvent être codées à un premier dispositif de codage de cartes magnétiques (1) sur une première piste d'une carte magnétique des indications de date et/ou d'heure où, après l'introduction de la carte magnétique dans l'installation de fermeture (3), celle-ci, lors d'une coïncidence des indications de date et/ou d'heure avec la date actuelle et l'heure actuelle est déverrouillée, **en ce que** peuvent être codées à un deuxième dispositif de codage de carte magnétique (2) des unités de temps sur une deuxième piste de la carte magnétique et **en ce qu'**une boîte d'énergie (4) est disposée dans le circuit de l'appareil (5, 6) qui, après l'introduction de la carte magnétique sur laquelle sont codées les unités de temps, libère l'appareil (5, 6) et, lors de la mise en service de celui-ci, déduit des unités de temps du codage de la carte magnétique.

2. Système selon la revendication 1, **caractérisé en ce que** des unités de temps peuvent être déduites du codage avec le deuxième dispositif de codage de carte magnétique.

3. Procédé de libération d'énergie limitée dans le temps d'au moins un appareil électrique ou électronique, qui se trouve dans une pièce protégée par une installation de fermeture, **caractérisé par** les étapes suivantes :
a) à un premier poste de codage de carte magnétique, des indications de temps sont codées sur une première piste d'une carte magnétique ;
b) à un deuxième poste de codage de carte magnétique, des unités de temps sont codées sur une deuxième piste de la carte magnétique ;
c) la carte magnétique est introduite dans l'installation de fermeture qui, lors d'une coïncidence des indications de temps avec le temps actuel, est déverrouillée ;
d) la carte magnétique est retirée de l'installation de fermeture ;
e) la carte magnétique est introduite dans une boîte d'énergie qui libère l'appareil lorsque des unités de temps sont codées sur la carte magnétique ;
f) pendant la durée en service de l'appareil, des unités de temps sont déduites du codage par la boîte d'énergie.

4. Procédé selon la revendication 3, **caractérisé en ce que** les unités de temps restantes sont déduites du codage par le deuxième poste de codage de carte magnétique.
